# EUROPEAN PATENT SPECIFICATION

(11) **EP 1 495 850 B1**
(45) Date of publication and mention of the grant of the patent: **15.08.2007**
(21) Application number: 03015272.2
(22) Date of filing: 07.07.2003
(51) Int. Cl.: B29C 45/14, B29C 43/36, B29C 45/56, B60R 13/02, B29C 69/02

(54) **Apparatus and method for producing an article made of thermoplastic and thermosetting materials**
Vorrichtung und Verfahren zum Herstellen von Gegenständen aus thermoplastischen und duroplastischen Kunststoffen
Appareil et procédé de fabrication d' articles des matières thermoplastiques et thermodurcissables

(43) Date of publication of application: 12.01.2005
(73) Proprietor: CRS Srl Centro Ricerche e Sperimentazioni, 10060 Frossasco (IT)
(72) Inventor: Cesano, Franco, 10060 San Secondo di Pinerolo (Torino) (IT)
(74) Representative: Marchitelli, Mauro

(56) References cited:
- EP-A- 1 153 725
- EP-A- 1 226 923
- DE-A- 19 733 598
- US-A- 4 088 729
- US-A- 4 418 031
- US-A- 5 091 131
- US-A- 5 902 533

## Description

The present invention relates to an apparatus and a method for producing an article made of thermoplastic and thermosetting materials according to the preambles of attached claims 1,5.

The invention was developed in particular for the production of articles formed by compression moulding of one or more plates, or sandwich, between two heated half-moulds provided with respective compression moulding surfaces. For the production of articles made of thermosetting material, plates or sheets constituted by fibres incorporated in a thermosetting resin, initially in the viscous or plastic state, are used. The material in sheet or plate form is compressed between the compression moulding surfaces of two half-moulds, movable with respect to one another between an open position and a closed position. During compression in the mould, the thermosetting material is heated in contact with the two half-moulds, until obtaining the polymerisation and hardening of the thermosetting resin.

In many technical sectors, in particular in the automotive industry, there is a need to provide reinforcing areas or fastening materials made of thermoplastic material on one or more faces of an article made of thermosetting material obtained by compression moulding. Current technology for the production of articles for the automotive industry obtained by compression moulding a thermosetting material, requires separately to produce by injection moulding reinforcing organs or fastening organs which, in a step following the thermo-compression moulding of the thermosetting material, are fastened onto one or more faces of the article made of thermosetting material by gluing, welding or by mechanical fastening means.

In the sector of moulding of articles made of compression moulded thermoplastic material, a method has already been proposed for forming by means of injection moulding a component anchored onto a surface of a plate made of thermoplastic material whilst said plate is compression moulded between two mutually facing surfaces of two half-moulds. For instance, the document EP-A-1153725 by the same Applicant discloses a method and an apparatus which provide an injection moulding cavity obtained in one of the two half-moulds and which terminates on the compression moulding surface of the same half-moulds by means of a restricted section to prevent the injection moulded material from damaging the compression moulded plate.

However, this technology cannot be immediately transferred to the sector of thermo-compression moulding of articles made of thermosetting materials. During compression moulding the thermosetting material of the plates may penetrate into the area where the thermoplastic material is to be injected. This is the case especially if an injection moulded component is to be formed on an extended surface portion of an article made of thermosetting material, due to the different behaviour of thermosetting materials with respect to thermoplastic materials during compression moulding.

The object of the present invention therefore is to provide an improved apparatus and a method for producing an article made of thermosetting material by compression moulding and simultaneous forming of auxiliary components made of thermoplastic material by means of injection moulding.

According to the present invention, said object is achieved by an apparatus and by a method having the characteristics set out in the claims 1, 5. Preferred embodiments are disclosed in the dependent claims.

The present invention shall now be described in detail with reference to the accompanying drawings, provided purely by way of non limiting example, in which:
- Figures 1 through 3 are schematic views showing three steps of a method according to the present invention,
- Figure 4 is a schematic perspective view of the part designated by the arrow IV in Figure 1,
- Figure 5 is a schematic perspective view of an article obtained with the method according to the invention, and
- Figures 6 and 7 are a section and a plan view according to the line VI-VI and according to the arrow VII of Figure 5.

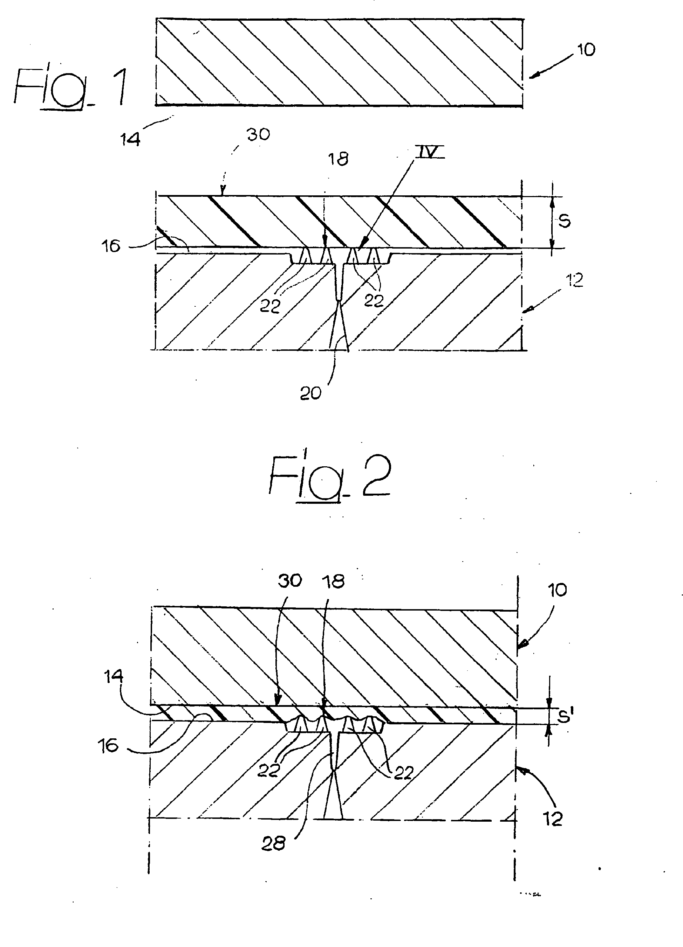

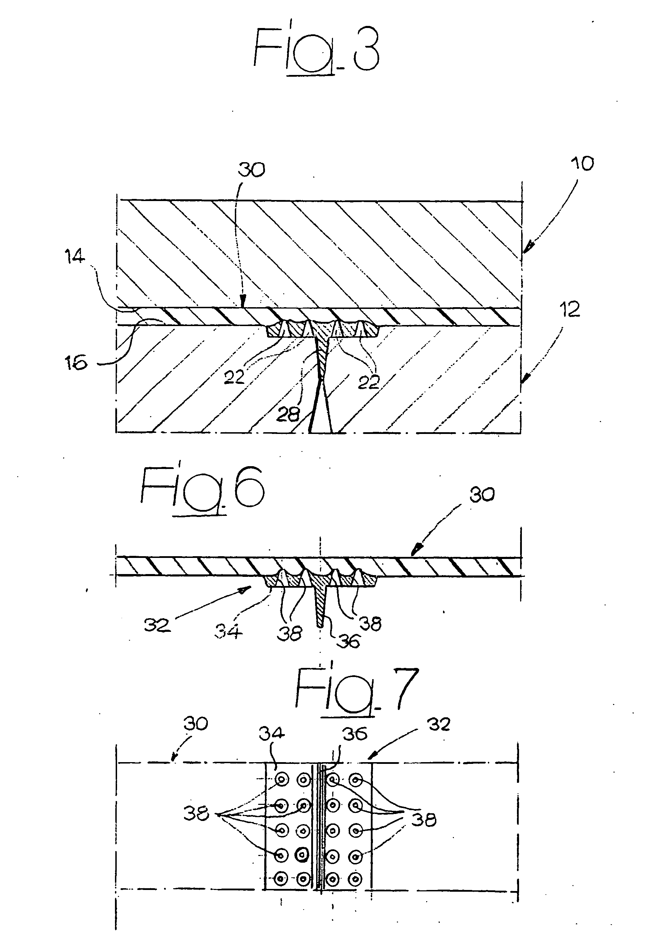

With reference to Figures 1 through 3, the reference numbers 10 and 12 schematically designate two half-moulds of a compression moulding apparatus, in particular for thermo-compression moulding of thermosetting plastic material. The half-moulds 10, 12 are provided with respective moulding surfaces 14, 16 and are movable between an open position shown in Figure 1 and a closed position shown in Figures 2 and 3. The half-moulds 10, 12 are made of metallic material and are provided with known heating means (not shown) able to bring the half-moulds to a temperature that is equal to or greater than the polymerisation temperature of the material to be moulded.

With reference in particular to Figure 4, in at least one of the two half-moulds 10, 12, for instance on the lower half-mould 12, is obtained at least an injection moulding area designated as 18. The injection moulding area 18 communicates with the moulding surface 16 and is in fluid communication with at least an injection channel 20 connected with an apparatus for injecting plastic material under pressure (not shown). According to the present invention, the injection moulding area 18 comprises a plurality of spacer elements 22 positioned in such a way as to prevent the material to be moulded by thermo-compression between the surfaces 14, 16 of the half-moulds 10, 12 from filling the injection moulding area 18. In the embodiment illustrated purely by way of example in the figures, the injection moulding area 18 comprises a bottom surface 24 which is lowered relative to the moulding surface 16 and wherefrom project a plurality of spacer elements 22, for instance pivot shaped, preferably integral with the half-mould. The spacer elements 22 have respective upper support surfaces 26 which can extend above or below a plane tangential to the moulding surface 16. The injection moulding area 18 can be provided with seats or cavities destined to be filled with injected plastic material. In the example illustrated in the figures, the injection moulding area is provided with a groove 28 with V-shaped cross section whose base terminates on the bottom surface 24 of the injection moulding area 18 and whose vertex communicates with at least one injection channel 20. The shape of the seats or cavities provided in the injection moulding area 18 may vary on a case by case basis and it will be complementary to that of the component or of the components to be formed by injection moulding.

With reference to Figure 1, in the first operative step of the method according to the invention one or more plates 30 of thermosetting material in the plastic state are positioned between the half-moulds 10, 12 in open position. It should be understood that reference herein to a plate of thermosetting material always includes the use of two or more plates or of so-called sandwiches or agglomerates, well known in the sector of moulding components made of thermosetting material. The initial thickness of the plate of thermosetting material 30 is designated as S.

In a second operative step schematically illustrated in Figure 2, the half-moulds 10, 12 are closed and the plate of thermosetting material 30 is compressed between the compression moulding surfaces 14, 16 until reaching a thickness S' which is considerably smaller than the initial thickness S. As shown in Figure 2, the spacer elements 22 serve the purpose of preventing, during the compression of the plate of thermosetting material 30 from the initial thickness S to the final thickness S2, the material constituting the plate 30 from penetrating into the injection moulding area 18 and filling the volume which is destined to be filled by injected material. The shape, the dimensions and the number of the spacer elements 22 may vary according to the shape and to the dimensions of the injection moulding area 18 and according to the type of material constituting the plate 30 and of the degree of compression whereto the plate is subjected.

In the operative step schematically shown in Figure 2, the plate of thermosetting material 30 heats up in contact with the half-moulds 10, 12 until the polymerisation temperature of the thermosetting resin is reached. Simultaneously or after a sufficient time to achieve conditions of partial or total hardening of the plate 30, some thermoplastic material is injected into the injection moulding area 18 through the injection channel or channels 20. The thermoplastic material is injected at a temperature that is considerably greater than the temperature of the half-moulds 10, 12. For instance, the half-moulds 10, 12 can be heated to a temperature in the order of 110-130°C whilst the thermoplastic material is injected into the injection moulding area 18 at a temperature for example in the order of 220-230°C. The material injected into the injection moulding area 18 cools in contact with the walls which define the injection moulding area 18 to a temperature that allows to obtain a sufficient compactness of the injection plastic material, such that it will maintain its own shape. Figure 3 shows the injection moulding step which takes place immediately or whilst the at least partially hardened thermosetting plate 30 is compressed between the half-moulds 10, 12. At the end of the injection and partial cooling and hardening of the injected thermoplastic material, the half-moulds 10, 12 are opened and the finished article is extracted.

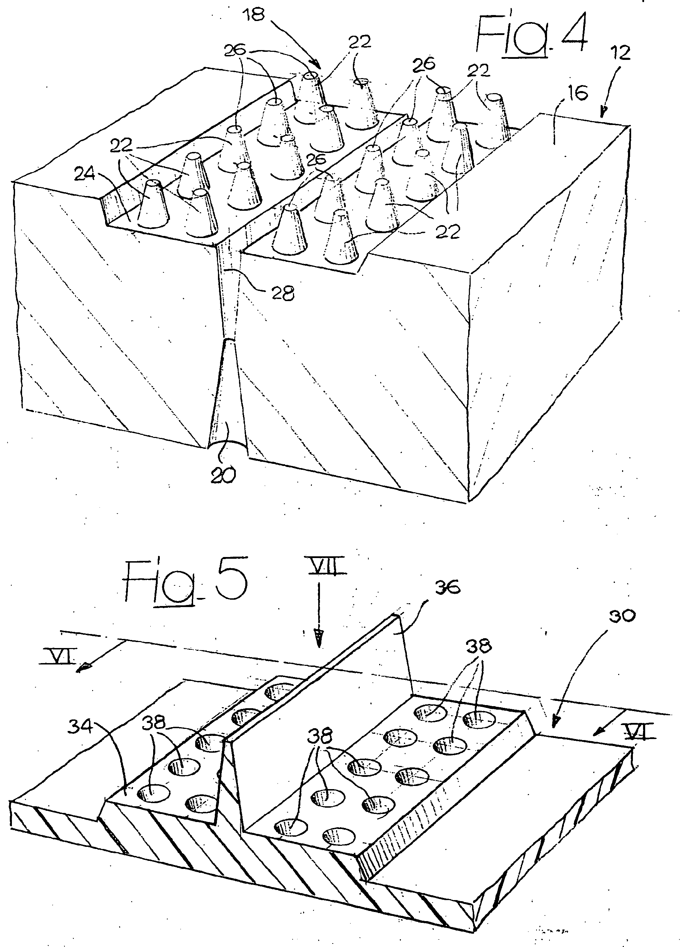

Figures 5, 6 and 7 schematically show the article obtained at the end of the moulding method according to the present invention. Said article comprises one or more plates, sandwich or agglomerate, 30 of thermosetting material moulded by thermo-compression and at least an injection moulded component 32 integrally formed on a surface of the plate 30. The component 32 has a shape complementary to that of the injection moulding area 18 and, in the example shown in the figures, it comprises a base 34 wherefrom projects a rib 36 with V-shaped section. On the base 34 are formed a plurality of holes 38 in correspondence with the spacer elements 22.

## Claims

1. An apparatus for moulding an article made of thermosetting and thermoplastic material, comprising:
- a first and a second half-mould (10, 12) provided with respective compression moulding surfaces (14, 16) suitable to compress between them one or more plates (30), sandwich or agglomerate, made of mouldable thermosetting material, and
- at least one injection moulding area (18) comprising a chamber communicating with at least one of said compression moulding surfaces (14, 16), in which, in use, thermoplastic material is injected,
**characterised in that** it comprises spacer means (22) provided in said injection moulding area (18), said spacer means (22) extending inside said chamber and positioned in such a way as to prevent said plate (30) from penetrating into said injection moulding area (18) when it is compressed between said compression moulding surfaces (14, 16).

2. An apparatus as claimed in claim 1, **characterised in that** said spacer means are integral with one of said half-moulds (10, 12) and project from at least a surface (24) of said injection moulding area (18).

3. An apparatus as claimed in claim 1, **characterised in that** said spacer means comprise a plurality of pivot shaped elements (22) projecting from a bottom surface (24) of said injection moulding area (18).

4. An apparatus as claimed in claim 3, **characterised in that** said projecting elements (22) have respective support surfaces (26) destined to come in contact with a surface of said plate (30).

5. A method for moulding an article made of thermosetting and the thermoplastic material, comprising the steps of:
- compressing a plate of mouldable thermosetting material between two mutually opposite moulding surfaces (14, 16),
- providing at least one injection moulding area (18) comprising a chamber communicating with at least one of said moulding surfaces (14, 16), and
- injecting thermoplastic material in contact with a surface portion of said plate (30) into said chamber of said injection moulding area (18),
**characterised in that** it comprises the step of providing spacer means (22) in said injection moulding area (18), extending inside said chamber and positioned in such a way as to prevent the penetration of said plate (30) into said injection moulding area (18).

6. A method as claimed in claim 5, **characterised in that** it comprises the step of heating said plate (30) in contact with said half-shells (10, 12) until reaching a polymerisation temperature of the plastic material constituting said plate (30).

7. A method as claimed in claim 6, **characterised in that** it comprises the step of heating the thermoplastic material before its injection into the aforesaid injection moulding area (18) and cooling said thermoplastic material in contact with said half-moulds (10, 12) down to a temperature of partial hardening.

## Patentansprüche

1. Vorrichtung zum Formen eines aus wärmehärtbarem und thermoplastischem Material hergestellten Erzeugnisses, umfassend:
- eine erste und eine zweite Halbform (10, 12), die mit jeweiligen Formpressflächen (14, 16) versehen sind, die geeignet sind, eine oder mehrere aus wärmehärtbarem Material hergestellte Platten (30), Sandwich oder Agglomerat, zwischen ihnen zu pressen; und
- wenigstens einen Spritzgießbereich (18), der eine Kammer umfasst, die mit wenigstens einer der Formpressflächen (14, 16) in Verbindung steht und in die bei Gebrauch thermoplastisches Material eingespritzt wird;
**dadurch gekennzeichnet, dass** sie Abstandseinrichtungen (22), die in dem Spritzgießbereich (18) bereitgestellt sind, umfasst, wobei sich die Abstandseinrichtungen (22) in der Kammer erstrecken und so positioniert sind, dass verhindert wird, dass die Platte (30) in den Spritzgießbereich (18) eindringt, wenn sie zwischen den Formpressflächen (14, 16) gepresst wird.

2. Vorrichtung nach Anspruch 1, **dadurch gekennzeichnet, dass** die Abstandseinrichtungen mit einer der Halbformen (10, 12) integral sind und von wenigstens einer Fläche (24) des Spritzgießbereichs (18) vorstehen.

3. Vorrichtung nach Anspruch 1, **dadurch gekennzeichnet, dass** die Abstandseinrichtungen eine Vielzahl zapfenförmiger Elemente (22) umfasst, die von einer unteren Fläche (24) des Spritzgießbereichs (18) vorsteht.

4. Vorrichtung nach Anspruch 3, **dadurch gekennzeichnet, dass** die vorstehenden Elemente (22) jeweilige Tragflächen (26) aufweisen, die dazu bestimmt sind, mit einer Fläche der Platte (30) in Kontakt zu kommen.

5. Verfahren zum Formen eines aus wärmehärtbarem und thermoplastischem Material hergestellten Erzeugnisses, die folgenden Schritte umfassend:
- Pressen einer Platte aus formbarem wärmehärtbarem Material zwischen zwei einander gegenüberliegenden Formflächen (14, 16);
- Bereitstellen wenigstens eines Spritzgießbereichs (18), der eine Kammer umfasst, die mit wenigstens einer der Formflächen (14, 16) in Verbindung steht; und
- Einspritzen thermoplastischen Materials in Kontakt mit einem Flächenabschnitt der Platte (30) in die Kammer des Spritzgießbereichs (18);
**dadurch gekennzeichnet, dass** es den Schritt des Bereitstellens von Abstandseinrichtungen (22) in dem Spritzgießbereich (18) umfasst, die sich in der Kammer erstrecken und so positioniert sind, dass das Eindringen der Platte (30) in den Spritzgießbereich (18) verhindert wird.

6. Verfahren nach Anspruch 5, **dadurch gekennzeichnet, dass** es den Schritt des Erwärmens der Platte (30) in Kontakt mit den Halbmasken (10, 12) bis zum Erreichen einer Polymerisationstemperatur des Kunststoffmaterials, das die Platte (30) bildet, umfasst.

7. Verfahren nach Anspruch 6, **dadurch gekennzeichnet, dass** es den Schritt des Erwärmens des thermoplastischen Materials vor dessen Einspritzung in den vorgenannten Spritzgießbereich (18) und des Abkühlens des thermoplastischen Materials in Kontakt mit den Halbformen (10, 12) herunter auf eine Temperatur partieller Härtung umfasst.

## Revendications

1. Appareil pour mouler un article réalisé avec un matériau thermodurcissable et thermoplastique, comprenant :
- un premier et un second demi-moules (10, 12) pourvus de surfaces de moulage par compression (14, 16) respectives appropriées pour comprimer entre elles une ou plusieurs plaques (30) sandwich ou agglomérées, réalisées avec un matériau thermodurcissable moulable, et
- au moins une zone de moulage par injection (18) comprenant une chambre communiquant avec au moins l'une desdites surfaces de moulage par compression (14, 16), dans lequel, en fonctionnement, on injecte un matériau thermoplastique,
**caractérisé en ce qu'**il comprend des moyens d'entretoise (22) ménagés dans ladite zone de moulage par injection (18), lesdits moyens d'entretoise (22) s'étendant à l'intérieur de ladite chambre et étant positionnés afin d'empêcher ladite plaque (30) de pénétrer dans ladite zone de moulage par injection (18) lorsqu'elle est comprimée entre lesdites surfaces de moulage par compression (14, 16).

2. Appareil selon la revendication 1, **caractérisé en ce que** lesdits moyens d'entretoise sont solidaires de l'un desdits demi-moules (10, 12) et font saillie à partir d'au moins une surface (24) de ladite zone de moulage par injection (18).

3. Appareil selon la revendication 1, **caractérisé en ce que** lesdits moyens d'entretoise comprennent une pluralité d'éléments en forme de pivot (22) faisant saillie à partir d'une surface inférieure (24) de ladite zone de moulage par injection (18).

4. Appareil selon la revendication 3, **caractérisé en ce que** lesdits éléments en saillie (22) ont des surfaces de support (26) respectives destinées à venir en contact avec une surface de ladite plaque (30).

5. Procédé pour mouler un article réalisé avec un matériau thermodurcissable et thermoplastique, comprenant les étapes consistant à :
- comprimer une plaque de matériau thermodurcissable moulable entre deux surfaces de moulage (14, 16) mutuellement opposées,
- prévoir au moins une zone de moulage par injection (18) comprenant une chambre communiquant avec au moins l'une desdites surfaces de moulage (14, 16), et
- injecter le matériau thermoplastique en contact avec une partie de surface de ladite plaque (30) dans ladite chambre de ladite zone de moulage par injection (18),
**caractérisé en ce qu'**il comprend l'étape consistant à prévoir des moyens d'entretoise (22) dans ladite zone de moulage par injection (18), s'étendant à l'intérieur de ladite chambre et positionnés afin d'empêcher la pénétration de ladite plaque (30) dans ladite zone de moulage par injection (18).

6. Procédé selon la revendication 5, **caractérisé en ce qu'**il comprend l'étape consistant à chauffer ladite plaque (30) en contact avec lesdites demi-coques (10, 12) jusqu'à atteindre une température de polymérisation de la matière plastique constituant ladite plaque (30).

7. Procédé selon la revendication 6, **caractérisé en ce qu'**il comprend l'étape consistant à chauffer le matériau thermoplastique avant son injection dans la zone de moulage par injection (18) mentionnée précédemment et à refroidir ledit matériau thermoplastique en contact avec lesdits demi-moules (10, 12) à une température de durcissement partiel.
